# EUROPEAN PATENT SPECIFICATION

(11) **EP 4 257 780 B1**
(45) Date of publication and mention of the grant of the patent: **05.11.2025**
(21) Application number: 22167392.4
(22) Date of filing: 08.04.2022
(51) Int. Cl.: E04H 15/06, B60P 3/34, B60R 9/06

(54) **REAR MOUNT TENT**
HECKMONTAGE-ZELT
TENTE À MONTAGE ARRIÈRE

(43) Date of publication of application: 11.10.2023
(73) Proprietor: Thule Sweden AB, 335 04 Hillerstorp (SE)
(72) Inventor: PETERSSON, Maja, 331 33 Värnamo (SE); OLAISON, Hannes, 523 40 Ulricehamn (SE)
(74) Representative: Wallentin, Lars

(56) References cited:
- GB-A- 1 596 101
- US-B1- 10 890 010
- US-B1- 6 179 368

## Description

### TECHNICAL FIELD

The present invention relates to vehicle mounted tents for camping and more specifically to a collapsible tent configured to be mounted to a vehicle and to related methods for mounting a collapsible tent to a vehicle and for transferring a collapsible tent from a raised position to a lowered position in relation to a vehicle.

### BACKGROUND OF THE INVENTION

Vehicle carried tents are a common and popular product which allows the camper to swiftly set camp where desired and transport the tent without having to use space inside of vehicle. In order for the tent to be able to be transported by the vehicle, it is generally collapsible into a compact form where it can be fitted to the vehicle such as on the roof or to the rear of the vehicle for instance on a tow ball or a hitch receiver thereof.

Some vehicle mounted tents allows erection of the tent while still being mounted to the vehicle. It is however often a complicated process which can be time consuming. It is a general desire from the manufacturers of such tents to provide a tent which facilitates erection thereof.

While vehicle carried tents often are collapsible, they are still often of considerably size and weight and may thus be difficult to handle when not mounted to the vehicle. Consequently, it is desired to provide a tent which facilitates handling thereof such as in terms of mounting and unmounting it to/from the vehicle.

A further aspect that manufacturers of vehicle mounted tents is constantly locking to improve is the effect that the tent has on the vehicle in terms of wind resistance and increased drag as this increases the use of energy, be it fuel or electricity, of the vehicle. As such, it is desired to provide a vehicle mounted tent providing reduced drag to the vehicle.

US 6179368 B1 relates to a camping unit built on and supported by a vehicle hitch arm connected to a vehicle's regular hitch receiver. It comprises a foldable base for forming a floor of a tent, the foldable base comprises at least two base sections which are pivotable in relation to each other between a use state and a collapsed state.

### SUMMARY OF THE INVENTION

In view of the above, an object of the present invention is to provide an improved collapsible tent which alleviates at least one of the drawbacks of the prior art. For example, an object of the present invention is to provide a collapsible tent that can be transported by a vehicle with reduced induced drag compared to prior art tents. Further, it is an object of the teachings herein to provide a collapsible tent that is easy to erect. Moreover, an object of the present disclosure is to provide a collapsible tent that is easy to mount to a vehicle and easy and safe to handle for the user.

The objects are achieved by the subject-matter of independent claims 1 and 13. Advantageous embodiments may be found in the dependent claims and in the accompanying description and drawings.

In a first aspect is a collapsible tent provided being configured to be mounted to a vehicle.

The collapsible tent being foldable between a use state and a collapsed state. The collapsible tent comprising:
a foldable base for forming a floor of the tent, the foldable base comprises at least two base sections being pivotable in relation to each other between the use state and the collapsed state,
a coupling arrangement being pivotable in relation to at least one of the base sections of the foldable base. The coupling arrangement being configured for connection and/or release of the collapsible tent to and/or from the vehicle by a pivoting movement of the coupling arrangement in relation to at least one of the base sections. The foldable base facilitates that the collapsible tent can be made compact in the collapsed state, reducing the impact of the collapsible tent on the aerodynamic efficiency of the vehicle. Moreover, the collapsible tent can be mounted on the rear of the vehicle, for instance to a tow ball thereof or to a hitch receiver, without protruding over the car. Additionally, the connection of the collapsible tent to the vehicle by means of a pivotable coupling arrangement greatly reduces the strain on the user when handling the tent during connection and disconnection thereof to/from the vehicle.

The coupling arrangement may be configured to be pivotable between a stowed position and an extended position when the collapsible tent is in the use state to allow connection to and release from the vehicle. The collapsible tent may thus not have to be moved in order to connect it to the vehicle when it is in the use state, facilitating handling of the collapsible tent. The user may simply arrange the vehicle in the correct position near the side of the collapsible tent with the coupling arrangement and subsequently pivot the coupling arrangement until it connects to the vehicle. The coupling arrangement further reduces the risk of that the user hits the collapsible tent with the vehicle, as the coupling arrangement may be in the raised position when the user positions the vehicle near the collapsible tent.

The collapsible tent may comprise a locking mechanism for locking the coupling arrangement in a stowed position in relation to the foldable base. The coupling arrangement may thus be locked in the stowed position in relation to the foldable base and vice versa, facilitating handling of the collapsible tent. The coupling arrangement may for instance be locked in the stowed position when the collapsible tent is in the use state, reducing the risk of it being in the way of access around the tent. Moreover, the collapsible tent can by means of the same locking mechanism be locked in a raised position, with the coupling arrangement in the stowed position, when mounted on the vehicle.

A coupling arrangement pivot axis around which the coupling arrangement pivots may be essentially parallel with a base pivot axis around which at least one of the at least two base sections of the foldable base folds.

A first base section of the foldable base is configured to be arranged distally of a second base section and a third base section of the foldable base in relation to the coupling arrangement when the collapsible tent is in the use state and wherein the first base section is configured to be arranged intermediately of the second base section and the third base section when the collapsible tent is in the collapsed state. As such, the collapsible tent, specifically the foldable base thereof, is compactly folded into the collapsed state while providing sufficient size of the base when in the use state. The aforementioned relationship of the base sections further facilitates folding and unfolding of the foldable base, as the base sections can essentially be folded/unfolded in a rolling fashion in either the distal to proximal direction, i.e. from the side furthest away from the coupling arrangement and towards the coupling arrangement, or in the opposite proximal to distal direction.

The second base section may be arranged intermediately of the first base section and the third base section when the collapsible tent is in the use state.

The second base section and third base section may be connected such that they in the collapsed state are configured to be arranged essentially parallelly and spaced apart such that a space is formed between the second base section and the third base section which is configured to hold at least the first base section and a tent canopy. The space between the second and third base section facilitates transportation of the items associated with the collapsible tent, such as a canopy and/or a foldable frame for supporting the canopy.

The collapsible tent may further comprise a foldable frame, wherein at least one frame member of the foldable frame is connected to a first base section of the foldable base such that it is configured to be erected by the pivoting movement of the first base section of the foldable base as the collapsible tent is arranged into the use state. The foldable frame can thus be more easily erected, as it follows the unfolding of the foldable base into the use state of the collapsible tent.

The collapsible tent may further comprise at least one support for supporting the collapsible tent against a support surface, the at least one support being moveable between a raised and an extended position and wherein a first portion of the at least one support is configured to be arranged such that it extends in parallel with the extension of the foldable base when the collapsible tent is in the use state and such that it extends below at least two adjacent base sections when the support is in the extended position. The at least one support can in the raised position be kept out of the way and be made compact such that it does not prevent folding of the collapsible tent. Further, in the extended state it may not only provide a sufficient distance between the base and the underlying support surface, it may further stabilize the relative position of two adjacent base sections by reducing movement in the joint between them.

The collapsible tent may in the collapsed state be configured to be pivoted between a raised and a lowered position in relation to the coupling arrangement when the coupling arrangement is attached to the vehicle. The collapsible tent may thus be more easily handled by the user when in the collapsed state, allowing it to be raised and lowered when in the collapsed state, for instance facilitating access to the trunk of the vehicle. A base section of the foldable base may be arranged in an upwardly facing position in the lowered position of the collapsible tent when the coupling arrangement is attached to the vehicle. The upwards facing base section may form a work surface or a surface that can be used for facilitating moving things into and out of the trunk of the associated vehicle.

The locking mechanism may be configured to be operated by foot when the coupling arrangement is attached to the vehicle, thus allowing the user to have both hands available for pivoting the collapsible tent or more specifically the foldable base thereof, in relation to the coupling arrangement.

The locking mechanism may be configured to be operated by hand when the collapsible tent is in the collapsed state and resting on the ground, allowing the user to easily unlock the coupling arrangement and pivot it in relation to the collapsible tent or specifically the foldable base thereof.

The collapsible tent may further comprise an angle section being arranged proximally of a base section of the foldable base in relation to the coupling arrangement, the base section defining a base plane of the foldable base when the collapsible tent is in the use state and wherein the angle section is arranged at an angle in relation to the base section. The angle section may thus form a headrest when the collapsible tent is in the use state and serve as a divider between the inside of the collapsible tent and the coupling arrangement. The angle section may further form a stop for the folding of the base sections as it limits the movement of the base sections in the proximal direction towards the coupling arrangement and further as a means for securing for instance the canopy of the collapsible tent in the space between the base sections.

The coupling arrangement may comprise a connector configured to connect the coupling arrangement to a rear of the vehicle in a pivoting movement of the coupling arrangement and such that the orientation of the coupling arrangement in relation to the vehicle is fixed. The rear mounting of the collapsible tent provides a reduction of the drag created by the collapsible tent on the vehicle, reducing the fuel/energy consumption thereof.

The connector may be a clamp connector being configured to support the collapsible tent on a tow ball of the vehicle such that the orientation of the coupling arrangement in relation to the tow ball is fixed.

The connector may comprise a releasable hitch adapter being configured to support the collapsible tent on a hitch receiver of the vehicle such that the orientation of the coupling arrangement in relation to the hitch receiver is fixed.

In a second aspect is a method for mounting a collapsible tent on a vehicle provided. The collapsible tent comprising a coupling arrangement being pivotable in relation to a base of the collapsible tent, the coupling arrangement being configured for connection and release of the collapsible tent to and from the vehicle by a pivoting movement of the coupling arrangement. The method comprises the steps of:
- pivoting the coupling arrangement in relation to the foldable base, for instance from a stowed position to an extended position,
- connecting the coupling arrangement to the vehicle such that a relative orientation of the coupling arrangement and the vehicle is fixed. A more convenient and easy way of connecting the collapsible tent to a vehicle is thus provided, where the user does not have to move the entire collapsible tent but merely pivot the coupling arrangement thereof.

The method may, in an embodiment in which the collapsible tent comprises a locking mechanism, further comprise:
- releasing the coupling arrangement from the stowed position by actuating the locking mechanism.

The method may further comprise, after the coupling arrangement is connected to the vehicle such that the orientation of the coupling arrangement and the vehicle is fixed, the step of:
- pivoting the collapsible tent in relation to the coupling arrangement until the coupling arrangement is in the stowed position and the collapsible tent is in the raised position. The user thus will not have to carry the full weight of the collapsible tent and can rely on the connection of the coupling arrangement to the vehicle to carry a significant part of the weight.

In a third aspect is a method provided for transferring a collapsible tent from a raised position to a lowered position in the collapsed state of the collapsible tent when the tent is mounted on a vehicle. The collapsible tent further comprises a coupling arrangement being pivotable in relation to a foldable base of the collapsible tent, the coupling arrangement being configured for connection and release of the collapsible tent from the vehicle by a pivoting movement of the coupling arrangement. The method comprising the step of:
- pivoting the collapsible tent in relation to the coupling arrangement around a pivot axis from the raised position to the lowered position of the collapsible tent. The user will thus not have to carry the entire weight of the collapsible tent as it, or specifically the foldable base thereof, pivots in relation to the coupling arrangement.

The method may, in an embodiment in which the collapsible tent further comprises a locking mechanism for locking the coupling arrangement in the stowed position in relation to the foldable base, further comprise:
- actuating the locking mechanism to release the coupling arrangement from the stowed position and the collapsible tent from the raised position.

The locking mechanism may in an embodiment be arranged on a first side of the collapsible tent such that it is actuatable by the foot of a user when the collapsible tent is mounted on a vehicle in the raised position and in the collapsed state, wherein the step of actuating the locking mechanism further comprises a user using a foot to actuate the locking mechanism. The user will thus have both hands available to move the collapsible tent, or more specifically the foldable base thereof, in relation to the coupling arrangement from the raised position to the lowered position.

In a fifth aspect is a collapsible tent provided being configured to be mounted to a vehicle. The collapsible tent being foldable between a use state and a collapsed state, the collapsible tent comprising:
a foldable base for forming a floor of the tent, the foldable base comprises at least a first base section, a second base section and a third base section. At least the first base section and the second base section are pivotable in relation to the adjacent base sections between the use state and the collapsed state of the collapsible tent, and
a foldable frame being configured to be folded with the folding of the foldable base. A compact collapsible tent in which the foldable base is divided into at least three base sections is thus provided which allows easy folding and unfolding of the foldable base and the associated foldable frame. The foldable frame which folds with the foldable base can be stored between the base sections and does not need to be disconnected from the foldable base upon folding thereof.

The first base section of the foldable base may be configured to be arranged distally of the second base section and the third base section of the foldable base in relation to the coupling arrangement when the collapsible tent is in the use state and wherein the first base section is configured to be arranged intermediately of the second base section and the third base section when the collapsible tent is in the collapsed state. As such, the collapsible tent, specifically the foldable base thereof, is compactly folded into the collapsed state while providing sufficient size of the base when in the use state. The aforementioned relationship of the base sections further facilitates folding and unfolding of the foldable base, as the base sections can essentially be folded/unfolded in a rolling fashion in either the distal to proximal direction, i.e. from the side furthest away from the third base section and towards the third base section, or in the opposite proximal to distal direction.

The collapsible tent may further comprise a coupling arrangement being pivotable in relation to the foldable base, the coupling arrangement being configured for connection and/or release of the collapsible tent to and/or from the vehicle by a pivoting movement of the coupling arrangement in relation to at least one of the base sections. The connection and/or release of the collapsible tent to and/or from the vehicle by means of a pivotable coupling arrangement greatly reduces the strain on the user when handling the tent during connection and disconnection thereof to/from the vehicle. The user does not have to maneuver the vehicle in close proximity to the coupling arrangement as it can be pivoted for connection to the vehicle after the vehicle is correctly position, without having to lift the entire collapsible tent.

The collapsible tent may further comprise an angle section being arranged proximally of the third base section of the foldable base in relation to the coupling arrangement, the third base section defining a base plane of the foldable base when the collapsible tent is in the use state and wherein the angle section being arranged at an angle in relation to the third base section. The angle section may thus form a headrest when the collapsible tent is in the use state and serve as a secure separation between the inside of the collapsible tent at the head portion thereof and the outside. The angle section may further form a stop for the folding of the base sections as it limits the movement of the base sections in the proximal direction and further as a means for securing for instance the canopy of the collapsible tent in the space formed between the base sections.

The collapsible tent may further comprise a foldable frame being foldable with the folding of the foldable base, wherein the collapsible tent comprises a frame tensioning arrangement configured to erect at least a proximal frame member when the collapsible tent is in the use state.

The frame tensioning arrangement may comprise an elongate tensioning member connected between the angle section and at least a proximal frame member, thus facilitating the erection of the proximal frame member. Moreover, the angle section provides an elevated mounting position of the end of the elongate tensioning member in relation to the third base section, which improves the angular relationship for the force provided thereby to the proximal frame member such that it pulls the proximal frame member with more proximally directed force.

A base pivot axis around which at least one of the at least two sections of the foldable base folds may be arranged at an angle in relation to a longitudinal direction of the collapsible tent.

A coupling arrangement pivot axis around which the coupling arrangement pivots may be essentially parallel with the foldable base pivot axis.

The coupling arrangement may comprise a connector configured to connect the coupling arrangement to the vehicle, optionally to a rear thereof, in a pivoting movement of the coupling arrangement and such that the relative orientation of the coupling arrangement and the vehicle is fixed. The rear mounting of the collapsible tent provides a reduction of the drag created by the collapsible tent on the vehicle, reducing the fuel/energy consumption thereof.

The connector may be a clamp connector being configured to support the collapsible tent on a tow ball of the vehicle such that the orientation of the coupling arrangement in relation to the tow ball is fixed.

The connector may comprise a releasable hitch adapter being configured to support the collapsible tent on a hitch receiver of the vehicle such that the orientation of the coupling arrangement in relation to the hitch receiver is fixed.

The collapsible tent may further comprise at least one support for supporting the collapsible tent against a support surface, the at least one support being moveable between a raised and an extended position and wherein a first portion of the at least one support is configured to be arranged such that it extends in parallel with the extension of the foldable base when the collapsible tent is in the use state and such that it extends below at least two adjacent base sections when the support is in the extended position. The at least one support can in the raised position be kept out of the way and be made compact such that it does not prevent folding of the collapsible tent. Further, in the extended state it may not only provide a sufficient distance between the base and the underlying support surface, it may further stabilize the relative position of two adjacent base sections by reducing movement in the joint between them.

The collapsible tent may in the collapsed state be configured to be pivoted between a raised and a lowered position in relation to the coupling arrangement when the coupling arrangement is attached to the vehicle. The collapsible tent may thus be more easily handled by the user when in the collapsed state, allowing it to be raised and lowered when in the collapsed state, for instance facilitating access to the trunk of the vehicle. A base section of the foldable base may be arranged in an upwardly facing position in the lowered position of the collapsible tent when the coupling arrangement is attached to the vehicle. The upwards facing base section may form a work surface or a surface that can be used for facilitating moving things into and out of the trunk of the associated vehicle.

In sixth aspect is a collapsible tent provided being configured to be mounted to a vehicle, the collapsible tent comprising:
a base for forming a floor of the tent, the foldable base comprises at least two sections being pivotable in relation to each other between a use state and a collapsed state of the collapsible tent,
a coupling arrangement for connection of the collapsible tent to the vehicle,
wherein the collapsible tent further comprises an angle section being arranged proximally of a base section of the foldable base in relation to the coupling arrangement, the base section defining a base plane of the foldable base when the collapsible tent is in the use state and wherein the angle section being arranged at an angle in relation to the base section. The angle section may thus form a headrest when the collapsible tent is in the use state and serve as a divider between the inside of the collapsible tent and the coupling arrangement. The angle section may further form a stop for the folding of the base sections as it limits the movement of the base sections in the proximal direction towards the coupling arrangement and further as a means for securing for instance a canopy of the collapsible tent in a space between the base sections.

The angle section may be arranged at a fixed angle in relation to the base section.

The angle between the angle section and the base section may be between 80° and 100°, preferably approximately 90°.

The angle section may be configured to be arranged on a first side of the collapsible tent, the first side forming an upper side of the collapsible tent when the collapsible tent is in the collapsed state and resting on the ground, a sideways facing side when the collapsible tent is in the use state and an underside of the collapsible tent when the collapsible tent is in the collapsed state and mounted on a vehicle. The angle section thus provides a plurality of functions depending on the state and orientation of the collapsible tent, such as a base for the coupling arrangement, or an associated frame member thereof, to be mounted to, a headrest and divider when the collapsible tent is in the use state and a means for closing in the downwardly direction of the space formed between the base sections when the collapsible tent is in the collapsed state and mounted on the vehicle.

The collapsible tent may further comprise a foldable frame being attached to the foldable base and foldable with the folding of the foldable base, wherein the collapsible tent comprises a frame tensioning arrangement configured to erect at least a proximal frame member when the collapsible tent is in the use state.

The frame tensioning arrangement may comprise an elongate tensioning member connected between the angle section and at least a proximal frame member, thus facilitating the erection of the proximal frame member. Moreover, the angle section provides an elevated mounting position of the end of the elongate tensioning member in relation to the base section, which improves the angular relationship for the force provided thereby to the proximal frame member such that it pulls the proximal frame member with more proximally directed force

The coupling arrangement may pivotable in relation to at least one of the base sections, the coupling arrangement being configured for connection and/or release of the collapsible tent to and/or from the vehicle by a pivoting movement of the coupling arrangement. The connection of the collapsible tent to the vehicle by means of a pivotable coupling arrangement greatly reduces the strain on the user when handling the tent during connection and disconnection thereof to/from the vehicle

A first base section of the foldable base may be configured to be arranged distally of a second base section and a third base section of the foldable base in relation to the coupling arrangement when the collapsible tent is in the use state and wherein the first base section is configured to be arranged intermediately of the second base section and the third base section when the collapsible tent is in the collapsed state. As such, the collapsible tent, specifically the foldable base thereof, is compactly folded into the collapsed state while providing sufficient size of the base when in the use state. The aforementioned relationship of the base sections further facilitates folding and unfolding of the foldable base, as the base sections can essentially be folded/unfolded in a rolling fashion in either the distal to proximal direction, i.e. from the side furthest away from the coupling arrangement and towards the coupling arrangement, or in the opposite proximal to distal direction.

The proximal frame member may comprise a respective frame member arranged on either lateral side of the collapsible tent and wherein the frame tensioning arrangement is configured to erect both lateral frame members of the proximal frame member simultaneously, thus facilitating erection of the proximal frame member.

The coupling arrangement may comprise a connector configured to connect the coupling arrangement to the vehicle in a pivoting movement of the coupling arrangement and such that the orientation of the coupling arrangement in relation to the vehicle is fixed.

The connector may be a clamp connector being configured to support the collapsible tent on a tow ball of the vehicle such that the orientation of the coupling arrangement in relation to the tow ball is fixed.

The connector may comprise a releasable hitch adapter being configured to support the collapsible tent on a hitch receiver of the vehicle such that the orientation of the coupling arrangement in relation to the hitch receiver is fixed.

The collapsible tent may further comprise at least one support for supporting the collapsible tent against a support surface, the at least one support being moveable between a raised and an extended position and wherein a first portion of the at least one support is configured to be arranged such that it extends in parallel with the extension of the foldable base when the collapsible tent is in the use state and such that it extends below at least two adjacent base sections when the support is in the extended position. The at least one support can in the raised position be kept out of the way and be made compact such that it does not prevent folding of the collapsible tent. Further, in the extended state it may not only provide a sufficient distance between the base and the underlying support surface, it may further stabilize the relative position of two adjacent base sections by reducing movement in the joint between them.

The collapsible tent may in the collapsed state be configured to be pivoted between a raised and a lowered position in relation to the coupling arrangement when the coupling arrangement is attached to the vehicle. The collapsible tent may thus be more easily handled by the user when in the collapsed state, allowing it to be raised and lowered when in the collapsed state, for instance facilitating access to the trunk of the vehicle. A base section of the foldable base may be arranged in an upwardly facing position in the lowered position of the collapsible tent when the coupling arrangement is attached to the vehicle. The upwards facing base section may form a work surface or a surface that can be used for facilitating moving things into and out of the trunk of the associated vehicle.

Generally, all terms used in the claims are to be interpreted according to their ordinary meaning in the technical field, unless explicitly defined other herein. All references to "a/an/the [element, device, component, means, step, etc]" are to be interpreted openly as referring to at least one instance of said element, device, component, means, step, etc, unless explicitly stated otherwise. The steps of any method disclosed herein do not have to be performed in the exact order disclosed, unless explicitly stated.

### BRIEF DESCRIPTION OF THE DRAWINGS

With reference to the appended drawings, below follows a more detailed description of embodiments of the invention cited as examples.

In the drawings:
Figure 1 discloses a side view of a collapsible tent with the coupling arrangement in the stowed position.
Figure 2 discloses a side view of a collapsible tent with the coupling arrangement in the extended position.
Figure 3a discloses a side view of a collapsible tent in a collapsed state and in a raised position when connected to a vehicle.
Figure 3b discloses a side view of a collapsible tent in a collapsed state and in a lowered position when connected to a vehicle.
Figure 3c discloses a side view of a collapsible tent during folding/unfolding when connected to a vehicle.
Figure 3d discloses a side view of a collapsible tent in a use state when connected to a vehicle.
Figure 4 discloses a side view of a collapsible tent in a collapsed state and in a lowered position when connected to a vehicle.
Figure 5a discloses a detail view of a support in a raised position.
Figure 5b discloses a detail view of a support in an extended position.
Figure 6a discloses a detail view of a support in a raised position.
Figure 6b discloses a detail view of a support in between a raised position and an extended position.
Figure 6c discloses a detail view of a support in an extended position.
Figure 7 discloses a side view of a collapsible tent in a use state when connected to a vehicle.
Figure 8 discloses a side view of a collapsible tent in a use state when disconnected from a vehicle.
Figure 9 discloses a perspective view of a collapsible tent in a use state.
Figure 10 discloses a side view of a collapsible tent in the collapsed state.
Figure 11 discloses a side of a collapsible tent in the collapsed state.
Figure 12 discloses a side view of a collapsible tent in a collapsed state and in the lowered position when connected to a vehicle.
Figure 13 discloses a side view of a collapsible tent in the collapsed state.
Figure 14 discloses a perspective view of a collapsible tent in a use state.
Figure 15 discloses a schematic flowchart of a method for mounting a collapsible tent on a vehicle.
Figure 16 discloses a schematic flowchart of a method for transferring a collapsible tent from a raised position to a lowered position in the collapsed state of the collapsible tent when the tent is mounted on a vehicle.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

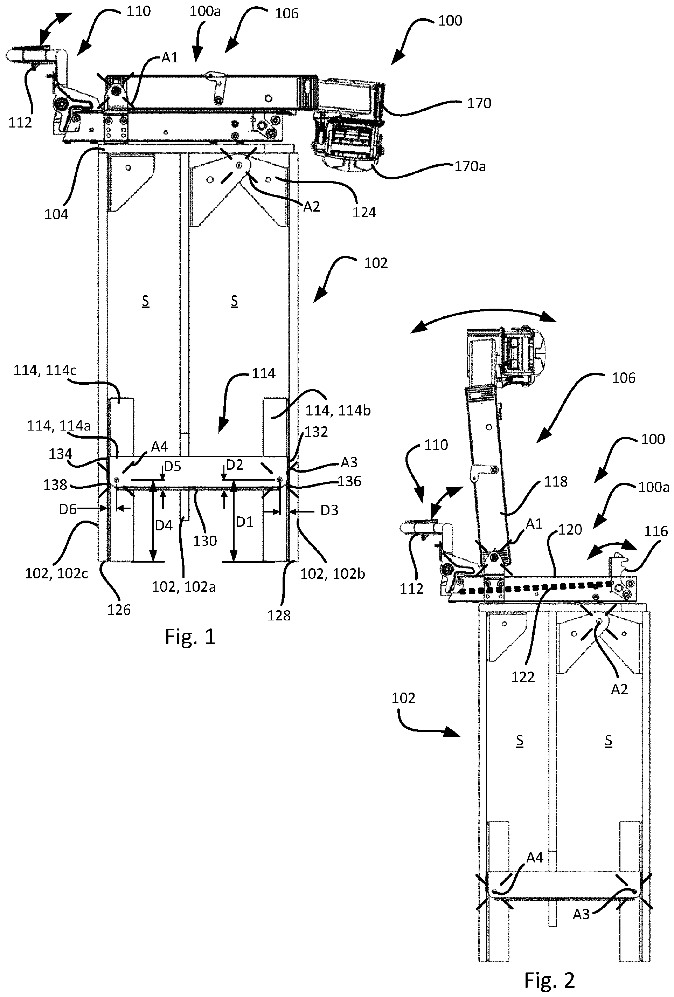

Figure 1 discloses a side view of a collapsible tent 100 which is configured to be mounted to a vehicle, depicted in a collapsed state. In the present disclosure, the vehicle should be considered as any suitable people carrier such as a car, truck, pick-up track etc. which is suited for carrying the collapsible tent 100.

The collapsible tent 100 is foldable, i.e. collapsible between a use state and the collapsed state. For this purpose, the collapsible tent 100 comprise a foldable base 102 for forming a floor of the tent. The foldable base 102 may be manufactured from any suitable material such as wood, a polymeric material, a composite material, a layered material etc. The foldable base 102 comprises at least two base sections 102a, 102b, 102c being pivotable in relation to each other between the use state and the collapsed state. In the present disclosure, the use state is the state in which the collapsible tent 100 is when it is used for camping. I.e., with the foldable base 102 in its unfolded and flat configuration. The collapsed state is to be interpreted as the configuration of the collapsible tent 100 when the foldable base 102 is folded into the compact state for instance for storage or transportation of the collapsible tent 100.

The collapsible tent 100 further comprises a coupling arrangement 106 being pivotable in relation to at least one of the base sections 102a, 102b, 102c of the foldable base, the coupling arrangement 106 being configured for connection and/or release of the collapsible tent 100 to and/or from the vehicle V by a pivoting movement of the coupling arrangement 106. Optionally, the coupling arrangement 106 is configured to connect to a tow ball or a hitch of the vehicle such that the relative orientation of the coupling arrangement 106 and the vehicle is fixed. The pivoting movement of the coupling arrangement 106 in relation to at least one of the base section 102a, 102b, 102c, i.e. to the remainder of the collapsible tent 100, not only facilitates the connection and/or disconnection of the collapsible tent 100 to the vehicle V but further allows the collapsible tent 100 to be moved in a pivoting movement between a raised and lowered position in relation to the vehicle V and the coupling arrangement 106 connected thereto which facilitates mounting of the collapsible tent 100 to the vehicle V, as will elaborated further on below. The raised position of the collapsible tent 100 is the orientation of the collapsible tent 100 in relation to the vehicle V and the coupling arrangement 106 when it is being transported by the vehicle. The lowered position is the orientation of the collapsible tent 100 when pivoted out of the raised position in relation to the vehicle V and the coupling arrangement 106, for instance for unfolding into the use state of the collapsible tent 100.

For the fixation of the relative orientation between the coupling arrangement 106 and the vehicle, the coupling arrangement 106 may be provided with connector 170, such as a clamp connector 170 having an actuator 170a, such as a lever, for, by means of a clamping force, fixating the coupling arrangement 106 to a tow ball of the vehicle. Such clamp connectors 108 and associated levers 170a are known in the art and will thus not be explained further in the present disclosure. It is however to be realized that the teachings herein are not limited to connection to tow balls by means of a clamp connector. Other known equivalent means of connection of the coupling arrangement 106 to the tow ball are also considered to be part of this disclosure.

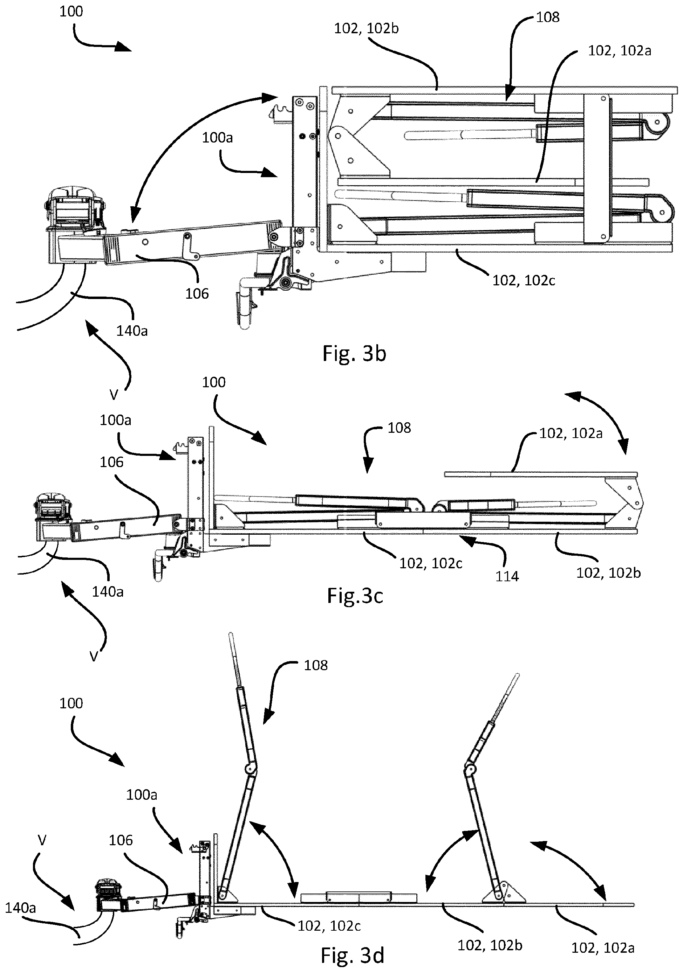

The collapsible tent 100 in the embodiment shown in Figure 1 comprises a first base section 102a, a second base section 102b and a third base section 102c. The base sections 102a, 102b, 102c together forms the floor of the tent 100 when the collapsible tent 100 is arranged in the use state, as is illustrated in for instance Figure 3d. Optionally, the first base section 102a of the foldable base is configured to be arranged distally of the second base section 102b and the third base section 102c of the foldable base in relation to the coupling arrangement 106 when the collapsible tent 100 is in the use state and the first base section 102a is configured to be arranged intermediately of the second base section 102b and the third base section 102c when the collapsible tent 100 is in the collapsed state. The collapsible tent 100 is thus made compact when in the collapsed state and the folding/unfolding of the base 102 is facilitated.

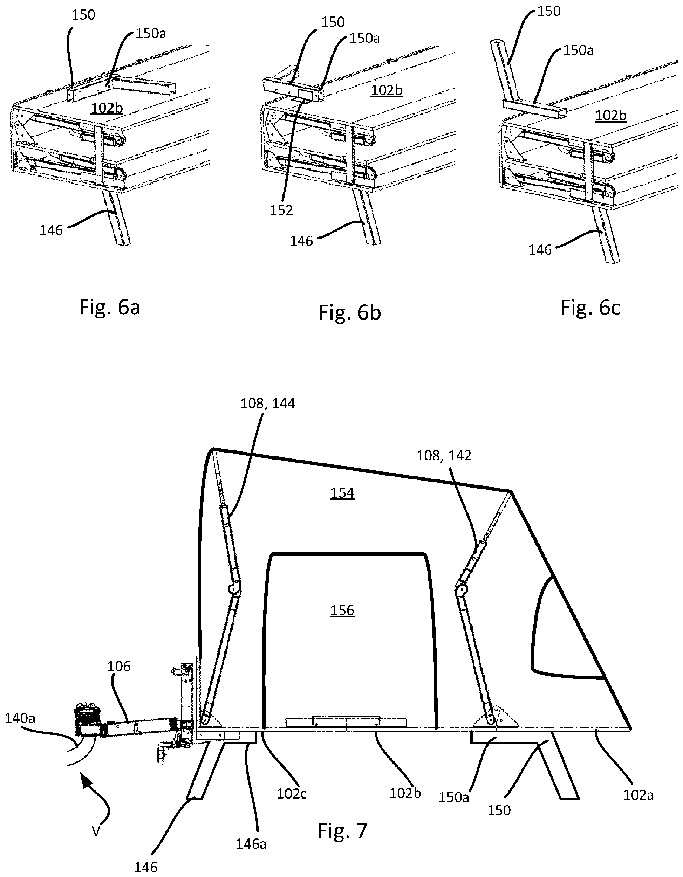

The second base section 102b is connected to the third base section 102c by means of a first hinge 114. Optionally, one first hinge 114 is arranged on each lateral side of the collapsible tent 100. The hinge 114 facilitates that the second base section 114b can pivot in relation to the third base section 114c. Optionally, as illustrated in Figure 1, the first hinge 114 may be a double joint hinge 114 such that the second base section 114b can be arranged essentially in parallel with the third base section 114c and spaced apart such that a space S is formed between the second base section 102b and the third base section 102c which is configured to hold at least the first base section 102a and a tent canopy (shown in Figure 7) when the collapsible tent 100 is in the collapsed state. The collapsible tent 100 is thus made compact and it is facilitated that the collapsible tent 100 can be carried for instance on the rear of smaller cars while not or only marginally restricting the rearward view for the driver. Additionally, drag of the collapsible tent 100 on the vehicle is also reduced.

Optionally, each first hinge 114 comprises a third portion 114c connected to the third base section 102c and a second portion 114b connected to the second base section 102b. The second portion 114b and third portion 114c are connected by a first portion 114a of the first hinge 114, the first portion being rotatably connected to both the second portion 114b and the third portion 114c. Accordingly, the collapsible tent 100 comprises a second base pivot axis A3 formed between the second portion 114b and the first portion 114a. Further the collapsible tent 100 comprises a third base pivot axis A4 formed between the third portion 114c and the first portion 114a. The second base pivot axis A3 and the third base pivot axis A4 together defines the movement between the second base section 114b and the third base section 114c.

Optionally, the second base pivot axis A3 is arranged at a distance D1 from an end 128 of the second base section 102b, such that the rotation of the first portion 114a in relation to the second portion 114b from the collapsed state to the use state of the collapsible tent 100 is limited by contact between the first portion 114a and the second base section 102b.

Optionally, a distance D2 between the second base pivot axis A3 and a first abutment surface 130 of the first portion 114a is essentially equal to a distance D3 between the second base pivot axis A3 and the second base section 102b.

Optionally, the distance between the second base pivot axis A3 and a second abutment surface 132 of the first portion 114a is essentially equal to the distance D3 between the second base pivot axis A3 and the second base section 102b. The second abutment surface 132 being essentially perpendicular to the first abutment surface 130 and arranged such that the rotation of the first portion 114a in relation to the second portion 114b from the use state to the collapsed state of the collapsible tent 100 is limited by contact between the first portion 114a and the second base section 102b. The first portion 114a further comprises a first intermediate surface 136 extending between the first abutment surface 130 and the second abutment surface 132 and having a radius extending from the second base pivot axis A3 that is essentially equal to distance D3. It is also conceivable that the first intermediate surface 136 may be a planar surface extending between the first abutment surface 130 and the second abutment surface 132.

Optionally, the third base pivot axis A4 is arranged at a distance D4 from an end 126 of the third base section 102c, such that the rotation of the first portion 114a in relation to the third portion 114c from the collapsed state to the use state of the collapsible tent 100 is limited by contact between the first portion 114a and the third base section 102c.

Optionally, a distance D5 between the third base pivot axis A3 and a first abutment surface 130 of the first portion 114a is essentially equal to a distance D6 between the third base pivot axis A4 and the third base section 102c.

Optionally, the distance between the third base pivot axis A4 and a third abutment surface 134 of the first portion 114a is essentially equal to the distance D6 between the second base pivot axis A3 and the second base section 102b. The third abutment surface 134 being essentially perpendicular to the first abutment surface 130 and arranged such that the rotation of the first portion 114a in relation to the third portion 114c from the use state to the collapsed state of the collapsible tent 100 is limited by contact between the first portion 114a and the third base section 102c. The first portion 114a further comprises a second intermediate surface 138 extending between the first abutment surface 130 and the third abutment surface 134 and having a radius extending from the third base pivot axis A4 that is essentially equal to distance D6. It is also conceivable that the second intermediate surface 138 may be a planar surface extending between the first abutment surface 130 and the third abutment surface 134.

In Figure 2, the collapsible tent 100 is shown with the coupling arrangement 106 pivoted from a stowed position, as illustrated in Figure 1, to an extended position. It is to be realized that the extended position should be interpreted simply as any position of the coupling arrangement 106 when it is not in the stowed position.

The collapsible tent 100 may comprise a locking mechanism 110 for locking the coupling arrangement 106 in the stowed position in relation to the foldable base 102. The locking mechanism is optionally arranged on a first side 100a of the collapsible tent 100 which is configured to be arranged facing upwards and form an upper side of the collapsible tent 100 when the collapsible tent 100 is not attached to a vehicle V and is in the collapsed state. The locking mechanism 110 may thus be configured to be operated by hand when the collapsible tent 100 is in the collapsed state and resting on the ground.

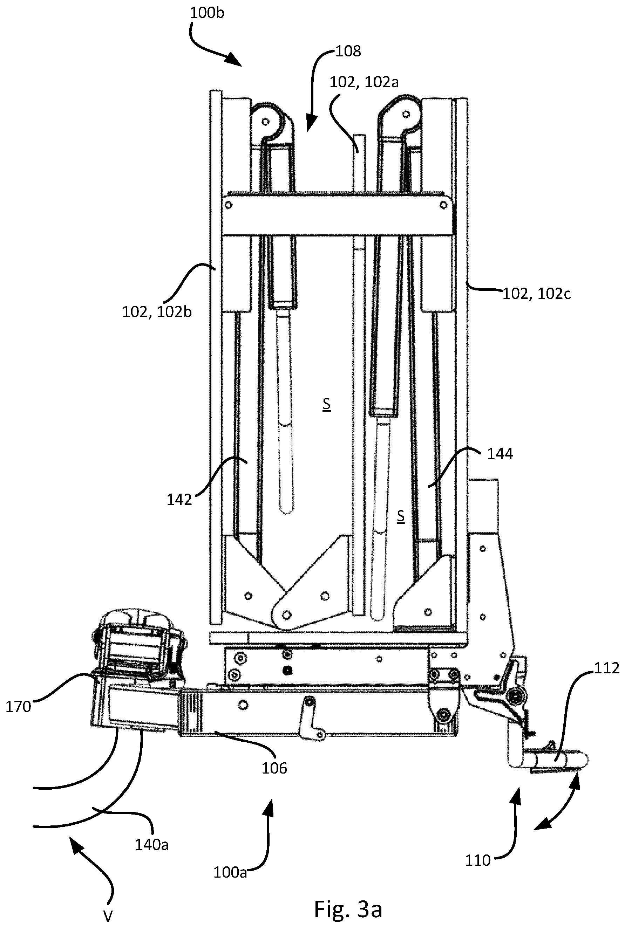

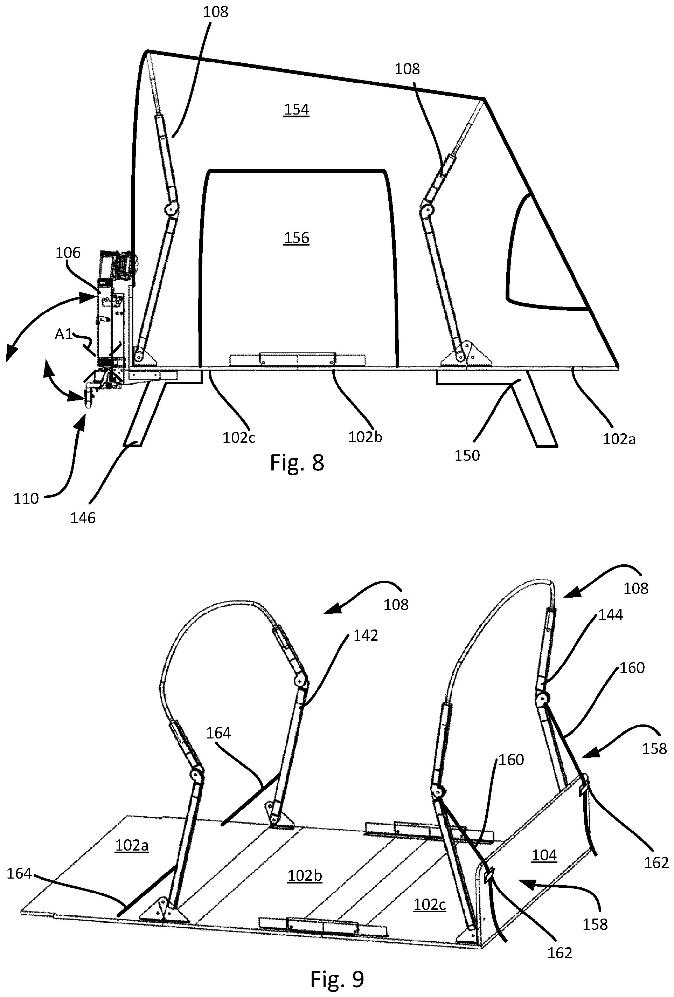

The locking mechanism optionally comprises an actuating member 112 that is moveable by a user, either by hand or by foot, in order to unlock and/or lock the coupling arrangement 106 in the stowed position. A control member 122 may further be provided which connects the actuating member 112 to a latch member 116 of the locking mechanism 110. The control member 122 may be formed for instance by a rod or a wire and is configured to move the latch member 116 into and out of engagement with the coupling arrangement 106 upon movement of the actuating member 112. Optionally, the latch member 116 is biased into the locked position, i.e. to the right in Figure 2, by means of a spring and is configured such that the coupling arrangement 106 can be locked in the stowed position without having to move the actuating member 112. The actuating member 112 is, as is illustrated in Figure 1, 3a and in Figure 8 configured to be easily accessible and actuatable for the user at each possible orientation and state of the collapsible tent 100.

A coupling arrangement pivot axis A1 around which the coupling arrangement 106 pivots is optionally essentially parallel with a base pivot axis A2, A3, A4 around which at least one of the at least two sections 102a, 102b, 102c of the foldable base 102 folds. The collapsible tent 100 thus folds out in the direction of travel of the vehicle to which it is attached, which is provides for a compact tent and facilitates folding of the collapsible tent 100.

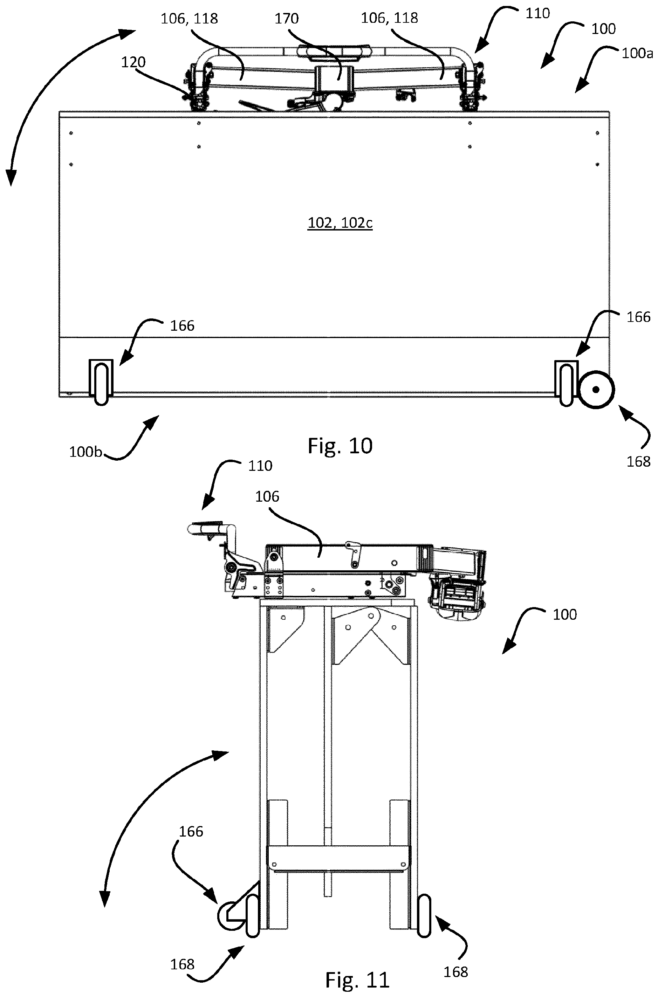

The collapsible tent 100 may further comprise a frame 120 to which the foldable base 102 and the coupling arrangement 106 is attached. Optionally, the coupling arrangement 106 comprises an arm 118 which extends between the connector 170 and the frame 120. Optionally is one arm 118 arranged on each lateral side of the coupling arrangement 106, extending from the connector 170 to opposite lateral sides of the frame 120, as is also further illustrated in Figure 10. Optionally, the locking mechanism 110 is associated with the frame 120 such that it pivots with the frame 120 and the remainder of the collapsible tent 100 in relation to the coupling arrangement 106.

Additionally, the third base section 102c may be in a fixed angular relationship with the frame 120 such that it is only the first base section 102a and the second base section 102b that folds/pivots between the use state and collapsed state of the collapsible tent 100.

Turning now to Figures 3a-3d, in which it is illustrated how the collapsible tent 100 may be lowered from a raised position to a lowered position in relation to a vehicle V and further unfolded from the collapsed state to the use state of the collapsible tent 100. The opposite process is naturally also possible, for mounting the collapsible tent 100 on the vehicle V.

In Figure 3a, the collapsible tent 100 is shown in a side view being connected/mounted to a vehicle V in the collapsed state of the collapsible tent 100 and in the raised position in relation to the vehicle V. When the collapsible tent 100 is in the raised position, the coupling arrangement 106 is optionally locked in the stowed position thereof. It is further shown how the collapsible tent 100 may comprise a foldable frame 108 which is foldable such that it fits into the space S between the first base section 102a and the second base section 102b when the collapsible tent 100 is in the collapsed state. The foldable frame 108 is configured to support a tent canopy 154, the tent canopy 154 may further as mentioned be configured to be folded with the foldable frame 108 and be arranged in the space S when the collapsible tent 100 is in the collapsed state. Additionally, the space S may hold mattresses and other items associated with the collapsible tent 100.

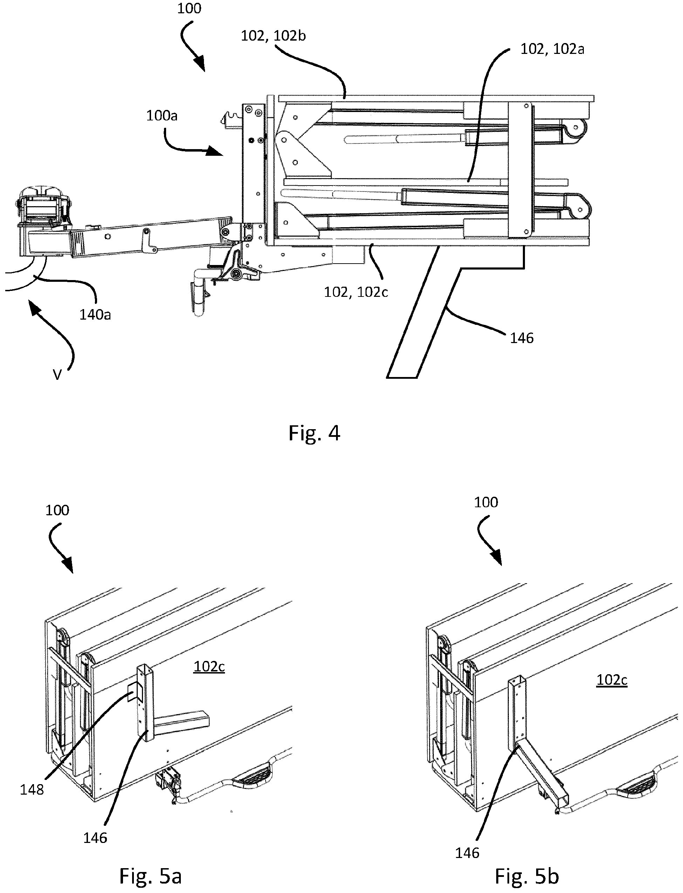

Optionally, at least one frame member 142 of the foldable frame is connected to the first base section 102a of the foldable base 100 such that it is configured to be erected by the pivoting movement of the first base section 102a of the foldable base 100 as the collapsible tent 100 is arranged into the use state. This will be elaborated further in conjunction with Figure 4 below.

The coupling arrangement 106 is in Figure 3a connected to the vehicle V, specifically to a tow ball 140a thereof. It is to be realized that the teachings herein are equally applicable for use with a hitch receiver 140b as well.

The coupling arrangement 106 is connected to the vehicle V such that the relative orientation of the coupling arrangement 106 and the vehicle V is fixed, i.e. such that coupling arrangement 106 will not move when the collapsible tent 100 is being transported by the vehicle V. The pivotable relationship between the coupling arrangement 106 and the remainder of the collapsible tent 100 allows the collapsible tent 100 to be moved between the raised and the lowered position while the coupling arrangement 106 remains fixed in orientation in relation to the vehicle V.

As is illustrated in Figure 3a, the locking mechanism 110 is configured to be operated by foot when the coupling arrangement 106 is attached to the vehicle V. The locking mechanism 110 is for this purpose arranged on the first side 100a of the collapsible tent 100 which is configured to be arranged facing downwards and form an underside of the collapsible tent 100 when the collapsible tent 100 is mounted to the vehicle V and is in the raised position. Specifically, the actuating member 112 of the locking mechanism 110 is arranged on the first side 100a and facing rearwardly such that it is accessible to the foot of a user when standing behind the vehicle V having the collapsible tent 100 mounted thereto, allowing the user to have both hands available for moving the collapsible tent 100 from the raised position to a lowered position in relation to the vehicle V and the coupling arrangement 106.

The first side 100a may form the underside of the collapsible tent 100 when the collapsible tent is in the collapsed state and in the raised position mounted on the vehicle V. When the collapsible tent 100 is in the collapsed state and resting on the ground, the first side 100a may form an upper side of the collapsible tent 100 as illustrated in e.g. Figure 1 and 2. When the collapsible tent 100 is in the use state, the first side 100a may form a sideways facing side of the collapsible tent 100, as is illustrated in Figure 3d. The locking mechanism 110 follows the pivoting movement of the first side 100a and is thus equally accessible and actuatable to a user in each state and orientation of the collapsible tent 100.

In Figure 3b, the collapsible tent 100 is shown in the collapsed state and in a lowered position in relation to the vehicle V and the coupling arrangement 106. In the lowered position, the first side 100a of the collapsible tent 100 faces towards the rear of the vehicle V when the collapsible tent 100 is still attached thereto. The functionality to lower the tent 100 from the raised position to the lowered position while still being attached via the coupling arrangement 106 to the vehicle V facilitates access to for instance a trunk of the vehicle V and further reduces the weight that the user have to carry when moving the collapsible tent 100 between the raised and lowered position.

The collapsible tent 100 may further be raised from the lowered position to the raised position, essentially reversing the process explained in the foregoing. However, the locking mechanism 110 may be configured to automatically lock the collapsible tent 100 in the raised position such that the user only has to focus on lifting/pivoting the collapsible tent 100 in relation to the coupling arrangement 106.

The collapsible tent 100 may further be locked in the collapsed state, i.e. such that the base sections 102a, 102b, 102c are locked in the mutual relationship illustrated in Figure 3b. The collapsible tent 100 may thus comprise a second locking mechanism (not shown) for locking and/or unlocking the base sections 102a, 102b, 102c such that the tent 100 can be folded from the collapsed state into the use state. It is also conceivable that the locking mechanism 110 may be in addition to locking the coupling arrangement in the stowed position also be configured to unlock the folding of the base section 102a, 102b, 102c.

In Figure 3c, the collapsible tent 100 is shown in a partially unfolded state between the collapsed state and the use state of the collapsible tent 100. It is further illustrated how the first hinge 114 forms a support for the alignment of the third base section 102c and the second base section 102b.

Subsequently, in Figure 3d, the collapsible tent 100 is brought into the use state by folding the first base section 102a into the plane of the second 102b and third base sections 102c. It is further illustrated how the collapsible tent 100 may be in the use state while the coupling arrangement 106 is still extended, i.e. not in the stowed position, and connected to the vehicle V.

Moreover, it is illustrated how the foldable frame 108 is unfolded such that it forms a support for the tent canopy, which is omitted from Figure 3d for clarity. The foldable frame 108 is optionally lockable in the unfolded/raised position illustrated in Figure 3d.

It is further to be realized that while the collapsible tent in Figure 3a-3d is illustrated as having a foldable frame 108, it is to be realized that the foregoing description is applicable to all embodiments disclosed herein for instance to a collapsible tent 100 not being provided with a foldable frame 108.

Turning to Figure 4 in which the collapsible tent 100 is shown in the collapsed state and in the lowered position. In Figure 4, the collapsible tent 100 is provided with at least one support 146 for supporting the collapsible tent 100 against a support surface, such as the ground. In Figure 4, the collapsible tent 100 is provided with a first support 146 being arranged on the third base section 102c such that it forms a stop when the collapsible tent 100 is lowered from the raised position into the lowered position. Optionally is one first support 146 arranged on each lateral side of the third base section 102c, however other arrangements and numbers of first supports 146 are also possible. The lateral direction in the present disclosure is to be interpreted as the direction perpendicular to a longitudinal direction and the direction of folding/unfolding of the foldable base 102. The longitudinal direction is to be interpreted as the direction of folding/unfolding of the foldable base 102 and is preferably, but not necessarily, parallel with the travelling direction of the associated vehicle V. The collapsible tent 100 will hence, by the provision of the first support 146, be more stable in the lowered position when it is connected to the vehicle V.

In Figures 5a and 5b, it is illustrated how the first support 146 may be configured to be moved between a raised and an extended position. In Figure 5a, the first support 146 is shown in its raised position, while it is illustrated in the extended position in Figure 5b. The first support 146 may thus be provided with a pivot member 148, such as a hinge, connecting the first support 146 to the third base section 102c and allowing it to be pivoted in relation thereto between the raised and extended position. Other means of achieving the movement between the raised and extended position are however also conceivable. For instance, the first support 146 may be provided with a telescopic portion allowing it to be extended to the desired length.

In Figures 6a to 6c, it is illustrated how the collapsible tent 100 may be provided with at least one second support 150. Optionally, as for the first support 146, is one second support 150 provided for each lateral side of the collapsible tent 100. It is further illustrated how the second support 150 may be configured to be moved between a raised and an extended position. In Figure 6a, the second support 150 is shown in its raised position, while it is illustrated in the extended position in Figure 6c. The second support 150 may thus be provided with a pivot member 152 connecting the second support 150 to the second base section 102b, allowing it to be pivoted in relation thereto between the raised and extended position. Other means of achieving the movement between the raised and extended position are however also conceivable. For instance, the second support 150 may be provided with a telescopic portion allowing it to be extended to the desired length. Moreover, the pivot member 152 may be configured to rotate in relation to the second base section 102b as illustrated in Figures 6a and 6b, allowing a first portion 150a of the second support 150 to rotate between the positions illustrated in Figures 6a and 6b respectively. In Figure 6a, the first portion 150a extends laterally in relation to the collapsible tent 100 while it extends essentially longitudinally in Figure 6b. It is however to be realized that the second support 150 may be rotated past the lateral and longitudinal position of the first portion 150a in either direction. Additionally, the pivot member 152 allows the second support member 150 to pivot between the positions illustrated in Figures 6b and 6c. The pivoting movement of the second support member 150 does not have to take place when the first portion 150a is arranged in the longitudinal direction of the collapsible tent, but may take place in any rotational orientation of the first portion 150a. Each second support 150 may thus be configured to pivot around an axis being parallel the longitudinal extension of the first portion 150a thereof.

In Figure 7, the collapsible tent 100 is shown from a side view in the use state while still being connected to a vehicle V. The collapsible tent 100 is provided with a canopy 154 being supported by the foldable frame 108. The canopy 154 further comprises an opening 156 facing in the lateral direction of the collapsible tent, the opening 156 may be at least partially connected to the remainder of the canopy 154 for instance by means of zip closure. Naturally, both lateral sides of the collapsible tent 100 may be provided with an opening 156.

In Figure 7, it is further illustrated how the first portion 150a of a support 150, illustrated as the second support 150, is configured to be arranged such that it extends in parallel with the extension of the foldable base 102 when the collapsible tent 100 is in the use state and such that it extends below at least two adjacent base sections 102a, 102b, 102c when the support 150 is in the extended position. It is illustrated how each second support 150 may be arranged such that the first portion 150a thereof extends underneath the joint between the first base section 102a and the second base section 102b, thus forming a reinforcement and stabilization of the relative orientation of the two base sections 102a,102b. It is further envisioned how a first portion 146a of each first support 146 may similarly be configured to extend underneath the joint between the third base section 102c and the second base section 102b when in its extended position.

In Figure 8 is the collapsible tent 100 shown from a side view in the use state being freestanding, i.e. not connected to a vehicle.

In Figure 8 it is further illustrated how the coupling arrangement 106 can be pivoted around the coupling arrangement pivot axis A1 when the collapsible tent 100 is in the use state. In Figure 8, the coupling arrangement 106 is arranged in the stowed position where it may be locked in place by the locking mechanism 110. Connection and disconnection of the collapsible tent 100 to/from a vehicle is thus facilitated. The collapsible tent 100 can be accessed by the vehicle with reduced risk of damage to the vehicle as the vehicle as the coupling arrangement 106 can be extended when the vehicle is in position. Further, disconnecting the collapsible tent 100 from the vehicle is facilitated as only the coupling arrangement 106 needs to be pivoted in order to release the collapsible tent 100 from the vehicle. Moreover, as explained in the foregoing, the locking mechanism 110 is arranged on the first side 100a of the collapsible tent 100 which is arranged facing in the sideways, i.e. horizontal direction, and longitudinally when the collapsible tent 100 is in the use state. This allows the user to easily actuate the locking mechanism 100 as illustrated by the arrow in Figure 8, to release the coupling arrangement 106 from the stowed position.

In Figure 9 is a perspective side view of the collapsible tent 100 shown, the collapsible tent comprising a foldable base 102 for forming a floor of the tent, the foldable base comprising at least a first base section 102a, a second base section 102b and a third base section 102c. Naturally, more than three base sections 102a, 102b, 102c may also be provided. At least the first base section 102a and the second base section 102b are pivotable in relation to the adjacent sections 102a, 102b, 102c, as described in the foregoing, between the use state and the collapsed state of the collapsible tent 100. The collapsible tent further comprises a foldable frame 108 which may be attached to the foldable base and be configured to be folded with the folding of the foldable base 102 as also described in the foregoing.

What is further illustrated in Figure 9, and applicable to all embodiments disclosed herein is that the collapsible tent 100 may further comprise an angle section 104 being arranged proximally of a base section 102c of the foldable base in relation to the coupling arrangement 106, optionally proximally of a third base section 102c. Proximally of is to be interpreted as at or near the proximal side of the base section 102c, the base section 102c may overlap the angle section 104 in the longitudinal direction and even extend to a limited extent proximally of the angle section 104. The extension of the base section 102c defining a base plane of the foldable base 102 when the collapsible tent 100 is in the use state, as illustrated in Figure 9. The base plane is to be interpreted as the general plane in which the foldable base 102 is arranged when in the use state. The angle section is arranged at an angle in relation to the base section 102c, preferably the third base section 102c. The angle section 104 is optionally in a fixed angular relationship with the base section 102c and may be arranged perpendicularly thereto. Other angular relationships are however also possible, for instance between 50° and 120° is possible. The angle section 104 may form a support for the coupling arrangement 106, specifically for the frame member 120 to which the coupling arrangement 106 may be pivotably attached. Additionally, the angle section 104 may form a headrest and a stable divider which separates the interior of the collapsible tent 100 from the coupling arrangement 106.

Further illustrated in Figure 9 and applicable to all embodiments disclosed herein in which the collapsible tent comprises a foldable frame 108, is that the collapsible tent 100 may further comprise a frame tensioning arrangement 158 configured to erect at least a proximal frame member 144 when the collapsible tent 100 is in the use state. The frame tensioning arrangement 158 may as is shown comprise an elongate tensioning member 160 connected between the angle section 104 and each proximal frame member 144. Optionally is one securing device 162, such as a clamp, included for each elongate tensioning member 160. It is however also conceivable that the elongate member 160 for each proximal frame member 144 is joined into one elongate tensioning member, allowing the user to tension more than one proximal frame member 144 with each elongate tensioning member 160. Accordingly, each proximal frame member 144 may thus be tensioned simultaneously by a user applying a suitable pulling force to the respective elongate member 160, thus ensuring that the tent canopy (not shown in Figure 9) is correctly arranged.

As is further shown and also applicable to all embodiments disclosed herein in which the collapsible tent comprises a foldable frame 108, is that the collapsible tent 100 may further comprise a second frame tensioning arrangement 164 configured to erect at least a distal frame member 142 when the collapsible tent 100 is in the use state. The second frame tensioning arrangement 160 may be arranged such that it raises each distal frame member 142 when the first base section 102a is brough into the use state, i.e. the state shown in Figure 9. The second frame tensioning arrangement 160 may comprise an elongate member, such as a strap, that is configured to provide the desired tension to keep each distal frame member 142 in the desired orientation. The length of each elongate member of each second frame tensioning arrangement 164 may further be adjustable, in order to adjust the position of the distal frame member 142.

In Figures 10 and 11 the collapsible tent 100 shown in two different side views being rotated 90° and in which the collapsible tent is arranged in the collapsed state. As illustrated in Figures 10 and 11, and applicable to each embodiment disclosed herein, the collapsible tent 100 may comprise at least one pair of wheels 166, 168. Each pair of wheels 166, 168 may be arranged on a second side 100b of the collapsible tent 100 opposite the first 100a side on which the coupling arrangement 106 is arranged, i.e. such that the collapsible tent 100 can be transported on the ground with the coupling arrangement 106 facing upwards when in the stowed position.

A first pair of wheels 166 is optionally arranged on the third base section 102c, i.e. the proximal base section 102c. The first pair of wheels 166 being arranged such that the first pair of wheels 166 can rotate around an axis being parallel with a lateral direction of the collapsible tent 100. The first pair of wheels 166 may thus facilitate transportation of the collapsible tent 100 when arranged on the ground and may further form a pivot point around which the collapsible tent 100 may pivot when connecting it to the vehicle V. The pivoting around the first pair of wheels 166 is illustrated in Figure 11, and may thus in combination with the pivoting of the coupling arrangement 106 facilitate connection of the collapsible tent 100 to the vehicle V.

The collapsible tent 100 may further comprise a second pair of wheels 168, the second pair of wheels 168 being arranged such that they can rotate around an axis being arranged at angle, optionally perpendicularly, to the lateral direction of the collapsible tent 100. One wheel of the second pair of wheels 168 may be arranged on the third base section 102c and one wheel arranged on the second base section 102b, both being arranged at the same lateral side of the collapsible tent 100. The user can thus lift the collapsible tent 100 on the opposite lateral side to the side where the second pair of wheels 168 is arranged and rely on the second pair of wheels 168 for facilitating moving the collapsible tent 100 in the lateral direction on the ground. I.e., the second pair of wheels 168 may function as a pivot point around which the collapsible tent 100 may pivot and thus support a large portion of the weight of the collapsible tent 100 when the user transports the collapsible tent 100 on the ground, thus facilitating this process.

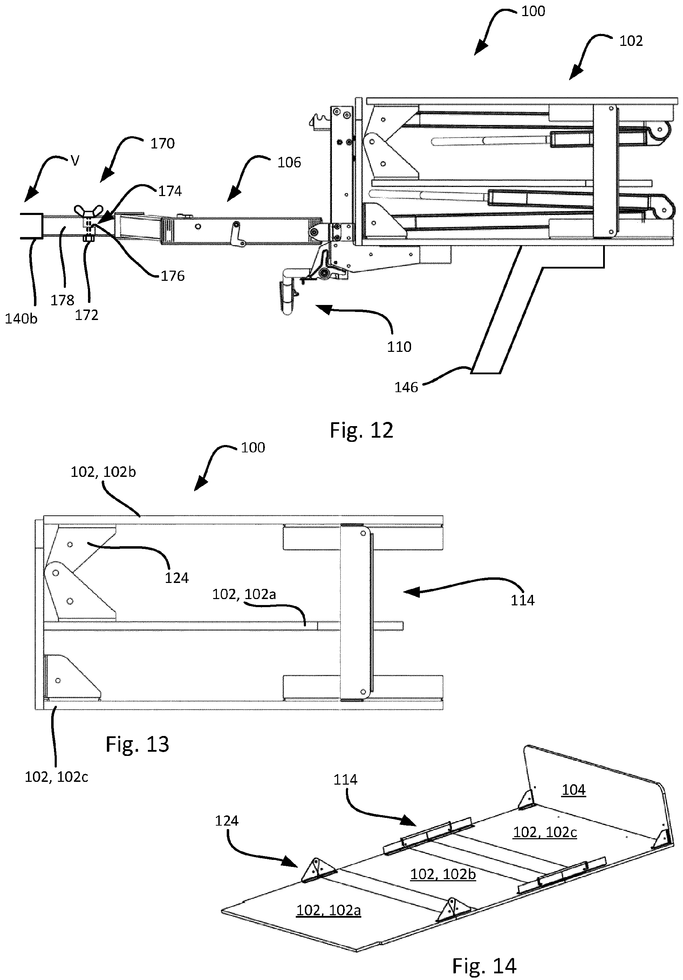

Figure 12 discloses a side view of the collapsible tent 100 in the collapsed and lowered state while still being connected to a vehicle V. In Figure 12, the collapsible tent 100 comprises a connector 170 configured to connect the coupling arrangement 106 to the vehicle in a pivoting movement of the coupling arrangement 100 and such that the relative orientation of the coupling arrangement 106 and the vehicle is fixed.

The connector 170 in Figure 12 further comprises a releasable hitch adapter 178 being configured to support the collapsible tent 100 on a hitch receiver 140b of the vehicle V such that the orientation of the coupling arrangement 106 in relation to the hitch receiver 140b is fixed. The hitch adapter 178 may comprises a tow ball and thus be configured to connect to a connector 170 in the form of a clamp connector 170 as illustrated in e.g. Figure 1. Alternatively, as illustrated in Figure 12, the coupling arrangement 106 and the hitch adapter 178 may comprise a mutual connection interface 174 being configured for connection of the coupling arrangement 106 to the vehicle V in a pivoting movement. Essentially, when the hitch adapter 178 is attached to the vehicle V, it may be interpreted as a part of the vehicle V and thus facilitate connection of the coupling arrangement 106 to the vehicle V by a pivoting movement. As illustrated in Figure 12, the connection interface 174 optionally comprises an abutment surface 176 which forms a stop for the pivoting movement of the coupling arrangement 106 towards the hitch adapter 178. The abutment surface 176 may be horizontal as illustrated in Figure 12 and form part of a stepped profile having a lower lip protruding on the hitch adapter 178 towards the coupling arrangement 106 and an upper lip on the coupling arrangement protruding towards the hitch adapter 178 being in mutual engagement when the coupling arrangement 106 is connected to the hitch adapter 178.

The abutment surface 176 may have other shapes as well, for instance it may be formed by an inclined and/or curved surface forming a corresponding connection interface 174 between the coupling arrangement 106 and the hitch adapter 178. The inclined and/or curved abutment surface 176 being formed such that the coupling arrangement 106 abuts against the hitch adapter 178 when the coupling arrangement 106 is pivoted towards the hitch adapter 178 around the coupling arrangement pivot axis A1 as described in the foregoing.

A fastener 172 may further be provided for securing the coupling arrangement 106 to the hitch adapter 178, for instance in the form of one or more bolts and corresponding nuts.

The side of the hitch adapter 178 arranged in the hitch receiver 140b may take any suitable shape known in the art for attachment in a hitch receiver and will thus not be explained in further detail herein.

In Figures 13 and 14 is a collapsible tent 100 shown in a side view in the collapsed state and in a perspective view in the use state respectively. The collapsible tent 100 being configured to be mounted to a vehicle V. The collapsible tent 100 being foldable between a use state and a collapsed state, as described in the foregoing. The collapsible tent 100 comprises a foldable base 102 for forming a floor of the tent, the foldable base comprises at least a first base section 102a, a second base section 102b and a third base section 102c. At least the first base section 102a and the second base section 102b are pivotable in relation to the adjacent sections 102a, 102b, 102c between the use state and the collapsed state of the collapsible tent 100. Optionally, the collapsible tent 100 further comprises a foldable frame 108 which may be attached to the foldable base and be configured to be folded with the folding of the foldable base 102 as described in conjunction with Figures 3a-3d in the foregoing.

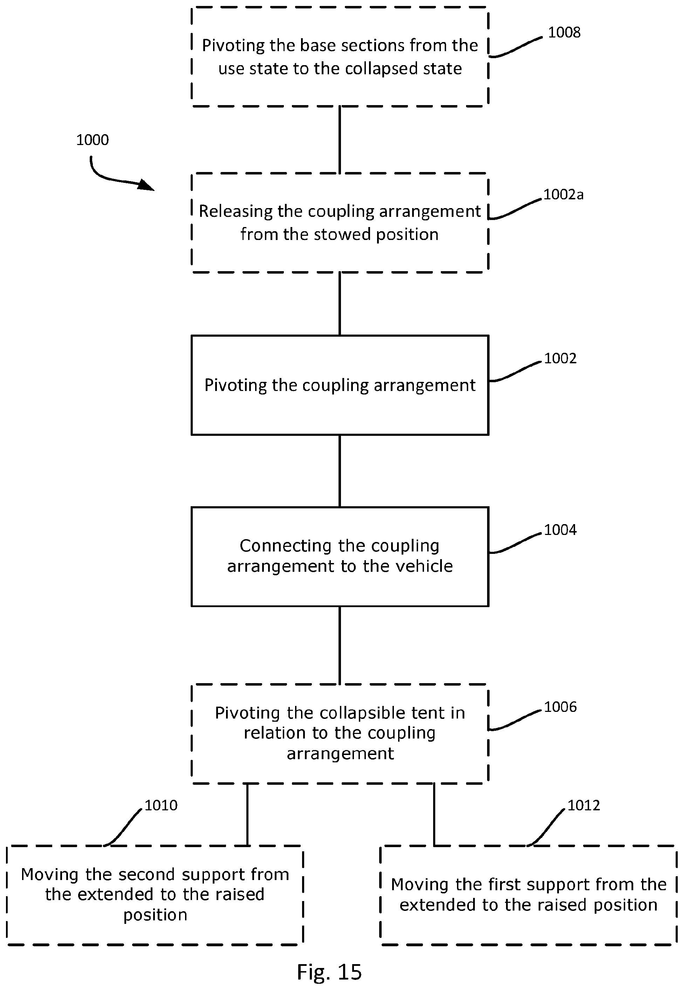

In Figure 15 is a schematic flowchart of a method 1000 for mounting a collapsible tent 100 on a vehicle shown. The collapsible tent 100 comprising a coupling arrangement 106 as described in the foregoing being pivotable in relation to a base 102 of the collapsible tent 100. The coupling arrangement 106 being configured for connection and release of the collapsible tent 100 from the vehicle V by a pivoting movement of the coupling arrangement 106. The method 1000 comprising the steps of:
- pivoting 1002 the coupling arrangement 106 in relation to the foldable base 102,
- connecting 1004 the coupling arrangement 106 to the vehicle such that a relative orientation of the coupling arrangement 106 and the vehicle V is fixed.

As explained in the foregoing, the collapsible tent 100 may in certain embodiments further comprise a locking mechanism 110 for locking the coupling arrangement 106 in a stowed position in relation to the foldable base 102. Upon actuation of the locking mechanism 110 can the coupling arrangement 106 be released and pivoted from the stowed position to an extended position. The method 1000 may in such embodiments further comprise:
- releasing the coupling arrangement 106 from the stowed position by actuating the locking mechanism 110.

The method 1000 may further comprise, after the coupling arrangement 106 is connected to the vehicle such that the orientation of the coupling arrangement 106 and the vehicle is fixed, the step of:
- pivoting 1006 the collapsible tent 100 in relation to the coupling arrangement 106 until the coupling arrangement 106 is in a stowed position and the collapsible tent 100 is in the raised position in relation to the vehicle V. Optionally, the locking mechanism 110 locks the collapsible tent 100 in place when it reaches the raised position in relation to the vehicle V and the coupling arrangement 106 is in the stowed position.

The method 1000 may further comprise pivoting 1008 the base sections 102a, 102b, 102c from the use state to the collapsed state of the collapsible tent 100, particularly the first base section 102a and the second base section 102b, before the step of pivoting 1006 the collapsible tent 100 in relation to the coupling arrangement 106.

Further, when the collapsible tent 100 is in the collapsed state and in the lowered position in relation to the vehicle V and the coupling arrangement 106 as is illustrated in Figures 6a, 6b and 6c, the method 1000 may comprise moving 1010 the second support 150 from an extended position to a raised position. Optionally, a pair of second supports 146 arranged on opposite lateral sides of the collapsible tent 100 are moved from the extended to the raised position.

Moreover, as is illustrated in Figures 5a and 5b, the method 1000 may comprise, when the collapsible tent 100 is in or near the raised position, moving 1012 the first support 146 from an extended position to a raised position. Optionally, a pair of first supports 146 arranged on opposite lateral sides of the collapsible tent 100 are moved from the extended to the raised position.

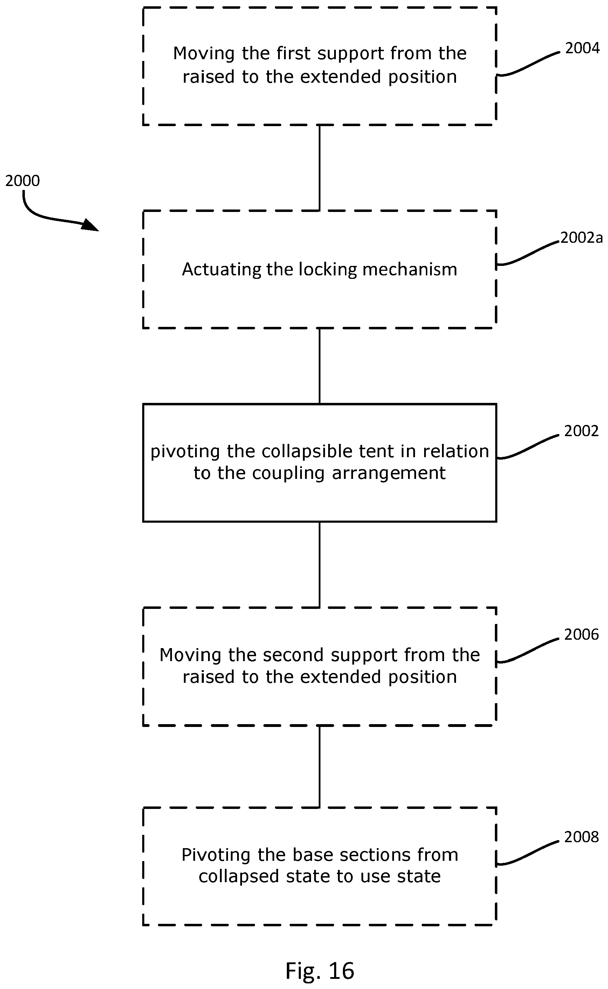

In Figure 16 is a schematic flowchart shown of a method 2000 for transferring a collapsible tent 100 from a raised position to a lowered position in the collapsed state of the collapsible tent when the tent is mounted on a vehicle V. The method 2000 comprising the step of:
- pivoting 2002 the collapsible tent 100 in relation to the coupling arrangement 106 around a coupling arrangement pivot axis A1 from the raised position to the lowered position of the collapsible tent 100.

In certain embodiment disclosed herein the collapsible tent 100 further comprises a locking mechanism 110 for locking the coupling arrangement 106 in a stowed position in relation to the foldable base 102, as described in the foregoing. Upon actuation of the locking mechanism 110 can the coupling arrangement 106 be released and pivoted from the stowed position to an extended position. In such embodiments, the method 2000 may further comprise:
- actuating 2002a the locking mechanism to release the coupling arrangement 100 from the stowed position and the collapsible tent 100 from the raised position.

The method 2000 may further comprise pivoting the base sections 102a, 102b, 102c from the collapsed state to the use state of the collapsible tent 100, particularly the first base section 102a and the second base section 102b, after collapsed tent has reached the lowered position.

In embodiments disclosed herein in which the locking mechanism 110 is arranged such that it is actuatable by the foot of a user, i.e. on the first side 100a of the collapsible tent 100 which forms an underside of the collapsible tent when the collapsible tent 100 is mounted on a vehicle V in the raised position and in the collapsed state, the method 2000 may further comprise:
- actuating 2002a the locking mechanism 110 to release the collapsible tent 100 from the raised position by pressing the locking mechanism 110 by a foot of the user. The user can thus have both hands free to pivot the collapsible tent 100 in relation to the coupling arrangement 106 from the raised to the lowered position in relation to the vehicle V.

Moreover, as is illustrated in Figures 5a and 5b, the method 2000 may comprise, when the collapsible tent 100 is in or near the raised position, moving 2004 the first support 146 from a raised position to an extended position. Optionally, a pair of first supports 146 arranged on opposite lateral sides of the collapsible tent 100 are moved from the raised to the extended position. Optionally, the first support 146 is moved into the extended position before the locking mechanism 110 is actuated.

Further, once the collapsible tent 100 is in the lowered position in relation to the vehicle V and the coupling arrangement 106 as is illustrated in Figures 6a, 6b and 6c, the method 2000 may comprise moving 2006 a second support 150 from a raised position to an extended position. Optionally, a pair of second supports 146 arranged on opposite lateral sides of the collapsible tent 100 are moved from the raised to the extended position.

It is to be understood that the present invention is not limited to the embodiments described above and illustrated in the drawings; rather, the skilled person will recognize that many changes and modifications may be made within the scope of the appended claims.

## Claims

1. A collapsible tent (100) configured to be mounted to a vehicle (V), the collapsible tent (100) being foldable between a use state and a collapsed state, the collapsible tent (100) comprising:
a foldable base (102) for forming a floor of the tent, the foldable base (102) comprises at least two base sections (102a, 102b, 102c) being pivotable in relation to each other between the use state and the collapsed state,
a coupling arrangement (106) being pivotable in relation to at least one of the base sections (102a, 102b, 102c) of the foldable base, **characterized in that**, the coupling arrangement (106) being configured for connection and/or release of the collapsible tent (100) to and/or from the vehicle (V) by a pivoting movement of the coupling arrangement (106) in relation to at least one of the base sections (102a, 102b, 102c).

2. The collapsible tent (100) according to claim 1, wherein the coupling arrangement (106) is configured to be pivotable between a stowed position and an extended position when the collapsible tent (100) is in the use state to allow connection to and release from the vehicle.

3. The collapsible tent (100) according to any one of claims 1 or 2, wherein the collapsible tent (100) comprises a locking mechanism (110) for locking the coupling arrangement (106) in a stowed position in relation to the foldable base.

4. The collapsible tent (100) according to any one of the preceding claims, wherein a coupling arrangement pivot axis (A1) around which the coupling arrangement (106) pivots is essentially parallel with a base pivot axis (A2, A3, A4) around which at least one of the at least two base sections (102a, 102b, 102c) of the foldable base (102) folds.

5. The collapsible tent (100) according to any one of the preceding claims, wherein a first base section (102a) of the foldable base (102) is configured to be arranged distally of a second base section (102b) and a third base section (102c) of the foldable base (102) in relation to the coupling arrangement (106) when the collapsible tent (100) is in the use state and wherein the first base section (102a) (102a) is configured to be arranged intermediately of the second base section (102b) and the third base section (102c) when the collapsible tent (100) is in the collapsed state.

6. The collapsible tent (100) according to claim 5, wherein the second base section (102b) is arranged intermediately of the first base section (102a) and the third base section (102c) when the collapsible tent (100) is in the use state.

7. The collapsible tent (100) according to claim 5 or 6, wherein the second base section (102b) and third base section (102c) are connected such that they in the collapsed state are configured to be arranged essentially parallelly and spaced apart such that a space (S) is formed between the second base section (102b) and the third base section (102c) which is configured to hold at least the first base section (102a) and a tent canopy (154).

8. The collapsible tent (100) according to any one of the preceding claims, further comprising a foldable frame (108), wherein at least one frame member (142) of the foldable frame (108) is connected to a first base section (102a) of the foldable base (100) such that it is configured to be erected by the pivoting movement of the first base section (102a) of the foldable base (100) as the collapsible tent (100) is arranged into the use state.

9. The collapsible tent (100) according to any one of the preceding claims, further comprising at least one support (146, 150) for supporting the collapsible tent (100) against a support surface, the at least one support (146, 150) being moveable between a raised and an extended position and wherein a first portion (146a, 150a) of the at least one support is configured to be arranged such that it extends in parallel with the extension of the foldable base (102) when the collapsible tent (100) is in the use state and such that it extends below at least two adjacent base sections (102a, 102b, 102c) when the support is in the extended position.

10. The collapsible tent (100) according to any one of the preceding claims, wherein the collapsible tent (100) in the collapsed state is configured to be pivoted between a raised and a lowered position in relation to the coupling arrangement (106) when the coupling arrangement (106) is attached to the vehicle.

11. The collapsible tent (100) according to any one of the preceding claims, wherein the collapsible tent (100) further comprises an angle section (104) being arranged proximally of a base section (102c) of the foldable base in relation to the coupling arrangement (106), the base section (102c) defining a base plane in the extension of the foldable base (102) when the collapsible tent (100) is in the use state and wherein the angle section (104) being arranged at an angle in relation to the base section (102c).

12. The collapsible tent (100) according to any one of the preceding claims, wherein the coupling arrangement (106) comprises a connector (178) configured to connect the coupling arrangement (106) to a rear of the vehicle (V) in a pivoting movement of the coupling arrangement (100) and such that the orientation of the coupling arrangement (106) in relation to the vehicle is fixed.

13. A method (1000) for mounting a collapsible tent (100) on a vehicle, the collapsible tent (100) comprising a coupling arrangement (106) being pivotable in relation to a base (102) of the collapsible tent (100), **characterized in that**, the coupling arrangement (106) being configured for connection and release of the collapsible tent (100) to and from the vehicle (V) by a pivoting movement of the coupling arrangement (106), wherein the method comprising the steps of:
- pivoting (1002) the coupling arrangement (106) in relation to the foldable base (102),
- connecting (1004) the coupling arrangement (106) to the vehicle (V).

## Patentansprüche

1. Klappzelt (100), das konfiguriert ist, um an einem Fahrzeug (V) montiert zu werden, wobei das Klappzelt (100) zwischen einem Gebrauchszustand und einem zusammengeklappten Zustand faltbar ist, das Klappzelt (100) umfassend:
eine faltbare Basis (102) zum Ausbilden eines Bodens des Zelts, wobei die faltbare Basis (102) mindestens zwei Basisabschnitte (102a, 102b, 102c) umfasst, die in Bezug zueinander zwischen dem Gebrauchszustand und dem zusammengeklappten Zustand schwenkbar sind,
eine Kopplungsanordnung (106), die in Bezug auf mindestens einen der Basisabschnitte (102a, 102b, 102c) der faltbaren Basis schwenkbar ist,
**dadurch gekennzeichnet, dass** die Kopplungsanordnung (106) zum Verbinden des Klappzelts (100) mit dem Fahrzeug (V) und/oder Lösen von diesem durch eine Schwenkbewegung der Kopplungsanordnung (106) in Bezug auf mindestens einen der Basisabschnitte (102a, 102b, 102c) konfiguriert ist.

2. Klappzelt (100) nach Anspruch 1, wobei die Kopplungsanordnung (106) konfiguriert ist, um zwischen einer verstauten Position und einer erstreckten Position schwenkbar zu sein, wenn sich das Klappzelt (100) in dem Gebrauchszustand befindet, um eine Verbindung mit dem Fahrzeug und das Lösen von diesem zu ermöglichen.

3. Klappzelt (100) nach einem der Ansprüche 1 oder 2, wobei das Klappzelt (100) einen Verriegelungsmechanismus (110) zum Verriegeln der Kopplungsanordnung (106) in einer verstauten Position in Bezug auf die faltbare Basis umfasst.

4. Klappzelt (100) nach einem der vorstehenden Ansprüche, wobei eine Kopplungsanordnungsschwenkachse (A1), um die herum die Kopplungsanordnung (106) schwenkt, im Wesentlichen parallel zu einer Basisschwenkachse (A2, A3, A4) ist, um die herum mindestens einer der mindestens zwei Basisabschnitte (102a, 102b, 102c) der faltbaren Basis (102) gefaltet wird.

5. Klappzelt (100) nach einem der vorstehenden Ansprüche, wobei ein erster Basisabschnitt (102a) der faltbaren Basis (102) konfiguriert ist, um in Bezug auf die Kopplungsanordnung (106) distal von einem zweiten Basisabschnitt (102b) und einem dritten Basisabschnitt (102c) der faltbaren Basis (102) angeordnet zu sein, wenn sich das Klappzelt (100) in dem Gebrauchszustand befindet, und wobei der erste Basisabschnitt (102a) (102a) konfiguriert ist, um zwischen dem zweiten Basisabschnitt (102b) und dem dritten Basisabschnitt (102c) angeordnet zu sein, wenn sich das Klappzelt (100) in dem zusammengeklappten Zustand befindet.

6. Klappzelt (100) nach Anspruch 5, wobei der zweite Basisabschnitt (102b) zwischen dem ersten Basisabschnitt (102a) und dem dritten Basisabschnitt (102c) angeordnet ist, wenn sich das Klappzelt (100) in dem Gebrauchszustand befindet.

7. Klappzelt (100) nach Anspruch 5 oder 6, wobei der zweite Basisabschnitt (102b) und der dritte Basisabschnitt (102c) derart verbunden sind, dass sie in dem zusammengeklappten Zustand konfiguriert sind, um im Wesentlichen parallel angeordnet und derart voneinander beabstandet zu sein, dass zwischen dem zweiten Basisabschnitt (102b) und dem dritten Basisabschnitt (102c) ein Raum (S) ausgebildet wird, der konfiguriert ist, um mindestens den ersten Basisabschnitt (102a) und eine Zeltüberdachung (154) aufzunehmen.

8. Klappzelt (100) nach einem der vorstehenden Ansprüche, ferner umfassend einen Faltrahmen (108), wobei mindestens ein Rahmenelement (142) des Faltrahmens (108) mit einem ersten Basisabschnitt (102a) der faltbaren Basis (100) derart verbunden ist, dass es konfiguriert ist, um durch die Schwenkbewegung des ersten Basisabschnitts (102a) der faltbaren Basis (100) aufgerichtet zu werden, wenn das Klappzelt (100) in den Gebrauchszustand gebracht wird.

9. Klappzelt (100) nach einem der vorstehenden Ansprüche, ferner umfassend mindestens eine Stütze (146, 150) zum Stützen des Klappzelts (100) gegen eine Stützoberfläche, wobei die mindestens eine Stütze (146, 150) zwischen einer aufgestellten und einer erstreckten Position beweglich ist und wobei ein erster Bereich (146a, 150a) der mindestens einen Stütze konfiguriert ist, um derart angeordnet zu sein, dass er sich parallel zu der Erstreckung der faltbaren Basis (102) erstreckt, wenn sich das Klappzelt (100) in dem Gebrauchszustand befindet, und dass er sich unter mindestens zwei angrenzenden Basisabschnitten (102a, 102b, 102c) erstreckt, wenn sich die Stütze in der erstreckten Position befindet.

10. Klappzelt (100) nach einem der vorstehenden Ansprüche, wobei das Klappzelt (100) in dem zusammengeklappten Zustand konfiguriert ist, um zwischen einer aufgestellten und einer abgesenkten Position in Bezug auf die Kopplungsanordnung (106) geschwenkt zu werden, wenn die Kopplungsanordnung (106) an dem Fahrzeug befestigt ist.

11. Klappzelt (100) nach einem der vorstehenden Ansprüche, wobei das Klappzelt (100) ferner einen Winkelabschnitt (104) umfasst, der proximal eines Basisabschnitts (102c) der faltbaren Basis in Bezug auf die Kopplungsanordnung (106) angeordnet ist, wobei der Basisabschnitt (102c) eine Basisebene in der Erstreckung der faltbaren Basis (102) definiert, wenn sich das Klappzelt (100) in dem Gebrauchszustand befindet, und wobei der Winkelabschnitt (104) in einem Winkel in Bezug auf den Basisabschnitt (102c) angeordnet ist.

12. Klappzelt (100) nach einem der vorstehenden Punkte, wobei die Kopplungsanordnung (106) einen Verbinder (178) umfasst, der konfiguriert ist, um die Kopplungsanordnung (106) bei einer Schwenkbewegung der Kopplungsanordnung (100) mit einer Rückseite des Fahrzeugs (V) derart zu verbinden, dass die Orientierung der Kopplungsanordnung (106) in Bezug auf das Fahrzeug festgelegt ist.

13. Verfahren (1000) zum Montieren eines Klappzelts (100) auf einem Fahrzeug, das Klappzelt (100) umfassend eine Kopplungsanordnung (106), die in Bezug auf eine Basis (102) des Klappzelts (100) schwenkbar ist,
**dadurch gekennzeichnet, dass** die Kopplungsanordnung (106) zum Verbinden des Klappzelts (100) mit dem Fahrzeug (V) und Lösen von diesem durch eine Schwenkbewegung der Kopplungsanordnung (106) konfiguriert ist, wobei das Verfahren die Schritte umfasst:
- Schwenken (1002) der Kopplungsanordnung (106) in Bezug auf die faltbare Basis (102),
- Verbinden (1004) der Kopplungsanordnung (106) mit dem Fahrzeug (V).

## Revendications

1. Tente pliable (100) conçue pour être montée sur un véhicule (V), la tente pliable (100) pouvant être rabattable entre un état d'utilisation et un état plié, la tente pliable (100) comprenant :
une base rabattable (102) pour former un plancher de la tente, la base rabattable (102) comprend au moins deux sections de base (102a, 102b, 102c) pouvant pivoter l'une par rapport à l'autre entre l'état d'utilisation et l'état plié,
un dispositif d'accouplement (106) pouvant pivoter par rapport à au moins une des sections de base (102a, 102b, 102c) de la base rabattable,
**caractérisée en ce que** le dispositif d'accouplement (106) est conçu pour relier la tente pliable (100) au véhicule (V) et/ou l'en détacher par un mouvement de pivotement du dispositif d'accouplement (106) par rapport à au moins une des sections de base (102a, 102b, 102c).

2. Tente pliable (100) selon la revendication 1, dans laquelle le dispositif d'accouplement (106) est conçu pour pivoter entre une position rangée et une position déployée lorsque la tente pliable (100) est dans l'état d'utilisation pour permettre la liaison au véhicule et le détachement de celui-ci.

3. Tente pliable (100) selon l'une quelconque des revendications 1 ou 2, dans laquelle la tente pliable (100) comprend un mécanisme de verrouillage (110) pour verrouiller le dispositif d'accouplement (106) dans une position de rangement par rapport à la base rabattable.

4. Tente pliable (100) selon l'une quelconque des revendications précédentes, dans laquelle l'axe de pivotement du dispositif d'accouplement (A1) autour duquel le dispositif d'accouplement (106) pivote est essentiellement parallèle à un axe de pivotement de la base (A2, A3, A4) autour duquel au moins l'une des deux sections de base (102a, 102b, 102c) de la base rabattable (102) se rabat.

5. Tente pliable (100) selon l'une quelconque des revendications précédentes, dans laquelle une première section de base (102a) de la base rabattable (102) est conçue pour être agencée de manière distale d'une deuxième section de base (102b) et d'une troisième section de base (102c) de la base rabattable (102) par rapport au dispositif d'accouplement (106) lorsque la tente pliable (100) est dans l'état d'utilisation et dans laquelle la première section de base (102a) est conçue pour être agencée de manière intermédiaire de la deuxième section de base (102b) et de la troisième section de base (102c) lorsque la tente pliable (100) est dans l'état plié.

6. Tente pliable (100) selon la revendication 5, dans laquelle la deuxième section de base (102b) est agencée de manière intermédiaire entre la première section de base (102a) et la troisième section de base (102c) lorsque la tente pliable (100) est dans l'état d'utilisation.

7. Tente pliable (100) selon la revendication 5 ou 6, dans laquelle la deuxième section de base (102b) et la troisième section de base (102c) sont reliées de telle sorte que dans l'état plié, elles sont conçues pour être essentiellement agencées parallèlement et espacées de telle sorte qu'un espace (S) est formé entre la deuxième section de base (102b) et la troisième section de base (102c) qui est conçu pour contenir au moins la première section de base (102a) et un auvent de tente (154).

8. Tente pliable (100) selon l'une quelconque des revendications précédentes, comprenant en outre un cadre rabattable (108), dans laquelle au moins un élément de cadre (142) du cadre rabattable (108) est relié à une première section de base (102a) de la base rabattable (100) de telle sorte qu'il est conçu pour être érigé par le mouvement de pivotement de la première section de base (102a) de la base rabattable (100) lorsque la tente pliable (100) est agencée dans l'état d'utilisation.

9. Tente pliable (100) selon l'une quelconque des revendications précédentes, comprenant en outre au moins un support (146, 150) pour supporter la tente pliable (100) contre une surface de support, l'au moins un support (146, 150) étant mobile entre une position relevée et une position déployée et dans laquelle une première partie (146a, 150a) de l'au moins un support est conçue pour être agencée de telle sorte qu'il s'étend en parallèle du déploiement de la base rabattable (102) lorsque la tente pliable (100) est dans l'état d'utilisation et de telle sorte qu'il s'étend en-dessous d'au moins deux sections de base adjacentes (102a, 102b, 102c) lorsque le support est dans la position déployée.

10. Tente pliable (100) selon l'une quelconque des revendications précédentes, dans laquelle la tente pliable (100) dans l'état plié est conçue pour être pivotée entre une position relevée et une position abaissée par rapport au dispositif d'accouplement (106) lorsque le dispositif d'accouplement (106) est fixé au véhicule.

11. Tente pliable (100) selon l'une quelconque des revendications précédentes, dans laquelle la tente pliable (100) comprend en outre une section angulaire (104) agencée à proximité d'une section de base (102c) de la base rabattable par rapport au dispositif d'accouplement (106), la section de base (102c) définissant un plan de base dans le déploiement de la base pliable (102) lorsque la tente pliable (100) est dans l'état d'utilisation et dans laquelle la section angulaire (104) est agencée au niveau d'un angle par rapport à la section de base (102c).

12. Tente pliable (100) selon l'une quelconque des revendications précédentes, dans laquelle le dispositif d'accouplement (106) comprend un connecteur (178) conçu pour relier le dispositif d'accouplement (106) à un arrière du véhicule (V) lors d'un mouvement de pivotement du dispositif d'accouplement (100) et de telle sorte que l'orientation du dispositif d'accouplement (106) par rapport au véhicule est fixe.

13. Procédé (1000) de montage d'une tente pliable (100) sur un véhicule, la tente pliable (100) comprenant un dispositif d'accouplement (106) pouvant pivoter par rapport à une base (102) de la tente pliable (100), **caractérisée en ce que** le dispositif d'accouplement (106) est conçu pour relier la tente pliable (100) du véhicule (V) et l'en détacher par un mouvement de pivotement du dispositif d'accouplement (106), dans laquelle le procédé comprend les étapes consistant à :
- faire pivoter (1002) le dispositif d'accouplement (106) par rapport à la base rabattable (102),
- relier (1004) le dispositif d'accouplement (106) au véhicule (V).
